(19) Europäisches Patentamt
European Patent Office
Office européen des brevets

(11) **EP 4 241 879 A1**

(12) **EUROPEAN PATENT APPLICATION**
published in accordance with Art. 153(4) EPC

(43) Date of publication:
**13.09.2023 Bulletin 2023/37**

(21) Application number: **21889214.9**

(22) Date of filing: **04.11.2021**

(51) International Patent Classification (IPC):
***B01J 35/02*** *(2006.01)*

(52) Cooperative Patent Classification (CPC):
**B01J 35/02**

(86) International application number:
**PCT/JP2021/040500**

(87) International publication number:
**WO 2022/097661 (12.05.2022 Gazette 2022/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.11.2020 JP 2020184170**

(71) Applicant: **Panasonic Intellectual Property
Management Co., Ltd.
Osaka-shi, Osaka 540-6207 (JP)**

(72) Inventors:
• **HASHIMOTO, Yasuhiro
Osaka 571-0057 (JP)**
• **INO, Daisuke
Osaka 571-0057 (JP)**

(74) Representative: **Eisenführ Speiser
Patentanwälte Rechtsanwälte PartGmbB
Postfach 31 02 60
80102 München (DE)**

(54) **CATALYST FOR FOOD PROCESSING USE, FOOD PROCESSING APPARATUS, FOOD
PROCESSING METHOD, AND METHOD FOR PRODUCING CATALYST FOR FOOD
PROCESSING USE**

(57) A catalyst 1 for food processing of the present disclosure includes a support 10 and a catalyst film 20. The catalyst film 20 is formed on the support 10 and contains a metal oxide. The catalyst film 20 has a first layer 21 and a second layer 22. The second layer 22 is separated from the support 20 by the first layer 21. A transmittance of the first layer 21 for light having a wavelength of 400 nm to 600 nm is higher than a transmittance of the second layer 22 for light having a wavelength of 400 nm to 600 nm. The second layer 22 has surface irregularities 22a having a radial wavelength of 25 nm to 90 nm.

FIG.1

EP 4 241 879 A1

**Description**

TECHNICAL FIELD

The present disclosure relates to a catalyst for food processing, a food processing apparatus, a food processing method, and a method for producing a catalyst for food processing.

BACKGROUND ART

Conventionally, food has been treated in various ways. For example, treatments using fermentation, rot, and enzyme reactions using oxidases are known as such treatments. In addition, treatments using non-enzymatic reactions such as expansion, swelling, aminocarbonyl reactions involving radicals, denaturation, dehydration and condensation, decomposition, and distillation are also known. Meanwhile, attempts have been made to treat food using photocatalysts.

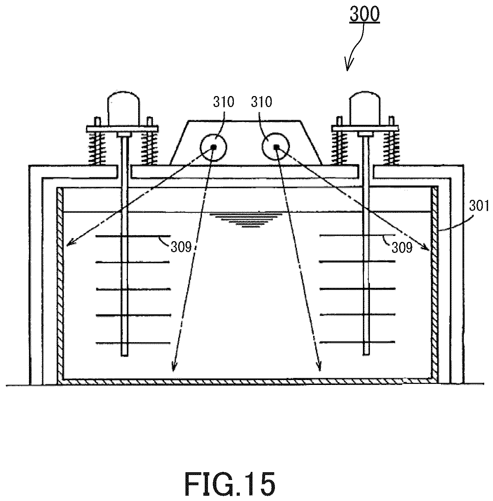

For example, Patent Literature 1 describes a method for producing a brewed product using a photocatalyst. In this production method, when sterilizing the brewed product, a photocatalyst supported on the surface of a specific member such as an agitating member is irradiated with excitation light while the brewed product placed in a tank is being agitated by the agitating member at room temperature. As shown in FIG. 15, Patent Literature 1 describes a microorganism sterilization apparatus 300 used for the production of sake, which is an example of the method for producing a brewed product. According to FIG. 15, in the microorganism sterilization apparatus 300, light sources 310 of excitation light are disposed outside a tank 301. In addition, an anatase type titanium oxide film is formed on each of the surfaces of agitating blades 309.

CITATION LIST

Patent Literature

Patent Literature 1: JP 2003-250514

SUMMARY OF INVENTION

Technical Problem

The present disclosure provides a catalyst for food processing that is advantageous in terms of enhancing the activity of chemical reactions in treatments of food.

Solution to Problem

A catalyst for food processing of the present disclosure includes:

a support; and
a catalyst film formed on the support and containing a metal oxide, wherein
the catalyst film has a first layer and a second layer separated from the support by the first layer,
a transmittance of the first layer for light having a wavelength of 400 nm to 600 nm is higher than a transmittance of the second layer for light having a wavelength of 400 nm to 600 nm, and
the second layer has surface irregularities having a radial wavelength of 25 nm to 90 nm.

Advantageous Effects of Invention

The catalyst for food processing of the present disclosure is advantageous in terms of enhancing the activity of chemical reactions in treatments of food.

BRIEF DESCRIPTION OF THE DRAWINGS

FIG. 1 is a cross-sectional view schematically showing a catalyst of Embodiment 1.
FIG. 2A is a cross-sectional view schematically showing surface irregularities having a predetermined arithmetic average roughness Ra.

FIG. 2B is a cross-sectional view schematically showing other surface irregularities having the same value of arithmetic average roughness Ra as the surface irregularities shown in FIG. 2A.

FIG. 3A is a cross-sectional view showing a result of approximating the surface irregularities shown in FIG. 2A with a wave.

FIG. 3B is a cross-sectional view showing a result of approximating the surface irregularities shown in FIG. 2B with a wave.

FIG. 4 is a cross-sectional view schematically showing an apparatus of Embodiment 2.

FIG. 5 is a graph showing a transmission spectrum of a sample A-1 according to Example 1.

FIG. 6 is a photograph showing the sample A-1 according to Example 1.

FIG. 7 is a graph showing a transmission spectrum of a sample B-1 according to Example 1.

FIG. 8 is a graph showing the catalytic activity of the sample B-1 according to Example 1.

FIG. 9 is a graph showing the relationship between a radial wavelength of surface irregularities of a catalyst film of each sample according to each Example and Comparative Example 1 and a firing temperature for forming a layer having the surface irregularities.

FIG. 10 is a graph showing a transmission spectrum of a sample according to Comparative Example 2.

FIG. 11 is a photograph showing the sample according to Comparative Example 2.

FIG. 12 is a graph showing the catalytic activity of the sample according to Comparative Example 2.

FIG. 13 is a graph showing a transmission spectrum of a sample according to Comparative Example 3.

FIG. 14 is a graph showing the catalytic activity of the sample according to Comparative Example 3.

FIG. 15 is a diagram showing a microorganism sterilization apparatus according to a conventional art.

DESCRIPTION OF EMBODIMENTS

(Finding on which the present disclosure is based)

A photocatalyst exhibits catalytic activity when irradiated with light having an energy equal to or higher than the band gap of the photocatalyst. It is considered that, in an apparatus using a photocatalyst, in many cases, it is desirable to irradiate the photocatalyst with light from a light source without having a solid between the light source and the photocatalyst in order to enhance the activity of the photocatalyst. Therefore, for example, in a structure in which a photocatalyst is formed on a support, light is usually applied from the photocatalyst side. For example, in the microorganism sterilization apparatus 300 described in Patent Literature 1, the anatase type titanium oxide film formed on the surface of each agitating blade 309 is irradiated with the light from the light source 310 which is located outside the tank 301.

Meanwhile, according to the study by the present inventors, in a structure in which a photocatalyst is formed on a support, even when light is applied from the photocatalyst side, it is difficult to enhance the activity of the photocatalyst if the transmittance of food for light is low. In addition, according to such a structure, light from a light source passes through food that is in contact with the photocatalyst, before being incident on the photocatalyst, so that it is also considered that the food may be altered by heat generation and chemical reactions due to the passage of the light.

Therefore, the present inventors have studied intensively to develop a technique to enhance the activity of the catalyst even when the transmittance of food for light is low. To enhance the activity of chemical reactions by the photocatalyst, it is advantageous to increase the absorptivity of the catalyst for light and to have a larger surface area of the catalyst on which a reaction occurs. For example, a catalyst film formed on a support by sputtering is dense and thus has a high absorptivity for light. However, the surface roughness of such a catalyst film is very small, and thus the surface area of the catalyst is small. Therefore, it is difficult to enhance the activity of the photocatalyst. On the other hand, for example, a catalyst film formed by drying a coating film of a liquid containing fine particles of the photocatalyst tends to have a large surface area. However, it is difficult to increase the density of the catalyst film, so that it is difficult to increase the absorptivity of the catalyst for light. Therefore, sufficient electron-hole pairs are less likely to be generated, so that the activity of the photocatalyst is less likely to be enhanced. The present inventors have newly found that, in a structure in which a catalyst film is formed on a support, if the catalyst film has predetermined characteristics, the activity of chemical reactions in treatments of food by applying light of a light source from the support side is enhanced. Based on this new finding, the present inventors have completed the catalyst for food processing of the present disclosure.

(Embodiments of the present disclosure)

Hereinafter, embodiments of the present disclosure will be described with reference to the drawings. The embodiments described below are all comprehensive or specific examples. The numerical values, shapes, materials, components, arrangement positions of the components, connection forms, process conditions, steps, order of the steps, etc., shown in the following embodiments are examples, and are not intended to limit the present disclosure. In addition, among the components in the following embodiments, the components that are not described in the independent claims that represent broadest concepts are described as discretionary components. Each drawing is a schematic diagram, and is not necessarily exactly illustrated.

(Embodiment 1)

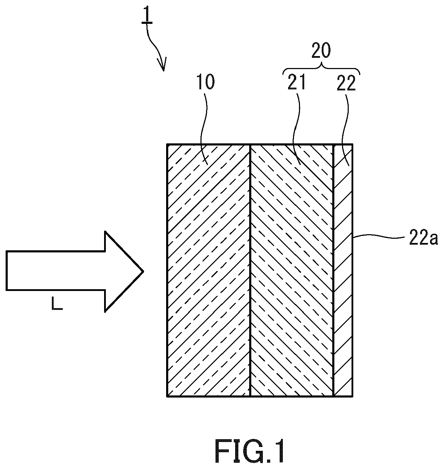

FIG. 1 is a cross-sectional view schematically showing a catalyst 1 of Embodiment 1. The catalyst 1 is used for treatments of food. The food may be a food material. The catalyst 1 includes a support 10 and a catalyst film 20. The catalyst film 20 is formed on the support 10. In addition, the catalyst film 20 contains a metal oxide. The catalyst film 20 includes a first layer 21 and a second layer 22. The second layer 22 is separated from the support 10 by the first layer 21. In other words, the first layer 21 is disposed between the support 10 and the second layer 22 in the thickness direction of the second layer 22. A transmittance $T_{21}$ of the first layer 21 for light having a wavelength of 400 nm to 600 nm is higher than a transmittance $T_{22}$ of the second layer 22 for light having a wavelength of 400 nm to 600 nm. Since light having a wavelength of 400 nm to 600 nm is included in the visible light range, for example, the fact that the transmittance $T_{21}$ is higher than the transmittance $T_{22}$ can be confirmed by visually observing a cross-section of the catalyst 1. The second layer 22 has surface irregularities 22a having a radial wavelength $S_{rw}$ of 25 nm to 90 nm.

As shown in FIG. 1, the catalyst 1 is irradiated with light L from the support 10 side. Therefore, the light L that has passed through the support 10 is incident on the first layer 21. Since the transmittance $T_{21}$ is higher than the transmittance $T_{22}$, it is understood that the first layer 21 is a layer having relatively few optical defects. Therefore, the absorptivity of the first layer 21 for the light L is likely to be higher, so that many electron-hole pairs can be generated in the first layer 21. In addition, the surface irregularities 22a of the second layer 22 have a radial wavelength $S_{rw}$ of 25 nm to 90 nm and have a desired surface area. Accordingly, many electron-hole pairs generated by light absorption in the first layer 21 diffuse toward the second layer 22, so that the activity of chemical reactions at the surface irregularities 22a having a desired surface area is likely to be higher. Therefore, according to the catalyst 1, the activity of chemical reactions is likely to be higher in the treatments of the food. In addition, light may not necessarily be caused to pass through the food and be applied to the catalyst, so that the activity of chemical reactions is likely to be higher in the treatments of the food even if the transmittance of the food for light is low. Moreover, it is likely to prevent the food from being altered by the passage of light through the food.

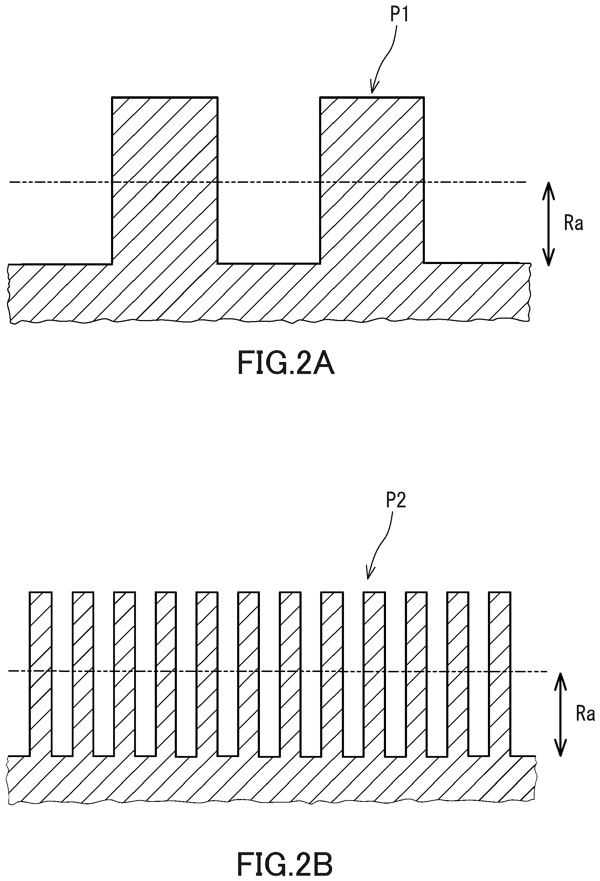

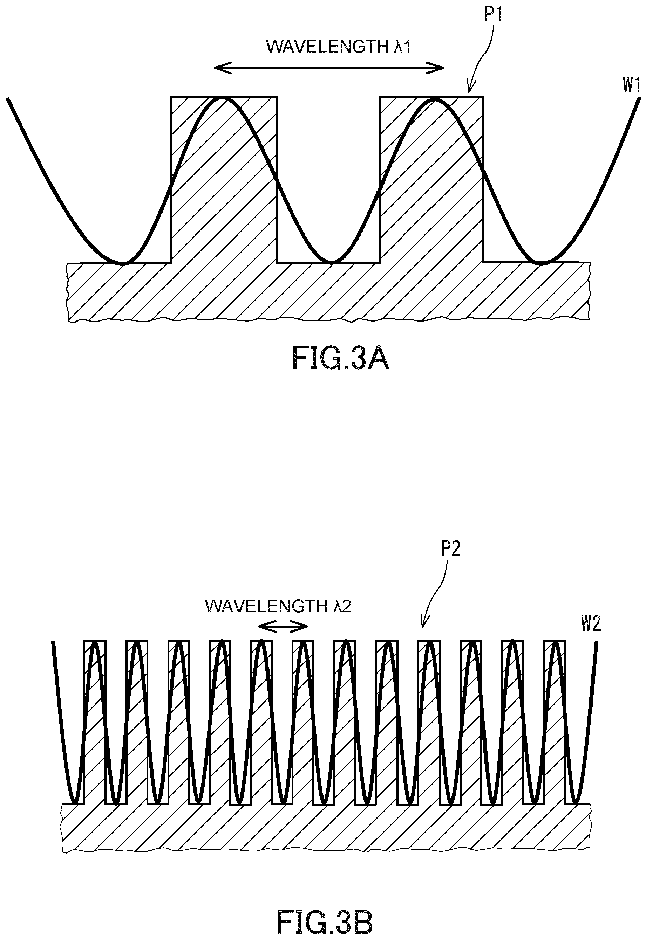

The radial wavelength $S_{rw}$ of the surface irregularities is determined by approximating the surface irregularities with a wave motion. FIG. 2A and FIG. 2B respectively show cross-sections of surface irregularities P1 and surface irregularities P2 having the same value of arithmetic average roughness Ra. The arithmetic average roughness Ra is defined, for example, in the Japanese Industrial Standards (JIS) B 0601-2001. FIG. 3A and FIG. 3B respectively show the results of approximating the surface irregularities P1 and the surface irregularities P2 with waves. As shown in FIG. 3A and FIG. 3B, the surface irregularities P1 are approximated by a wave W1 having a wavelength $\lambda 1$, and the surface irregularities P2 are approximated by a wave W2 having a wavelength $\lambda 2$. The radial wavelength $S_{rw}$ of the surface irregularities P1 corresponds to the wavelength of the wave W1, and the radial wavelength $S_{rw}$ of the surface irregularities P2 corresponds to the wavelength of the wave W2. The wavelength of the wave W2 is shorter than the wavelength of the wave W1. Although the surface irregularities P1 and the surface irregularities P2 have the same value of arithmetic average roughness Ra, the radial wavelength of the surface irregularities P2 is smaller than the radial wavelength of the surface irregularities P1.

For example, a cross-sectional height profile of the surface irregularities 22a is obtained using an atomic force microscope (AFM). By analyzing the cross-sectional height profile using Image Metrology's analysis software Scanning Probe Image Processor (SPIP), the radial wavelength $S_{rw}$ of the surface irregularities 22a can be determined. For example, as the AFM, an AFM that operates in various environments such as an atmospheric pressure environment, a vacuum environment, and in a solution can be used.

For example, the radial wavelength $S_{rw}$ is defined in CIRP Annals, (France), 1995, Vol. 44, issue 1, p. 517-522. According to this literature, first, after Fourier transform of a scanning probe microscope (SPM) image, the DC component is moved to the center of an $M \times M$ frequency square to define (0, 0). For (0, 0), (M/2) - 1 semicircles are defined. These semicircles have radii r of 1, 2, ..., (M/2) - 1. A total amplitude value B(r) based on the semicircles having the radii r is represented by Expression (1) below.

[Math. 1]

$$B(r) = \sum_{i=0}^{M-1} |F(u(r \cos(\frac{i\pi}{M})), v(r \sin(\frac{i\pi}{M})))| \qquad \text{Expression (1)}$$

Values F(u(p), v(q)) of Fourier transform for non-integer values p = rcos(iπ/M) and q = rsin(iπ/M) are calculated by linear interpolation between the values of F(u(p), v(q)) at adjacent 2 × 2 pixels. A semicircle having a radius $r_{max}$ is a semicircle having a radius r and having a largest total amplitude value $B_{max}$. This semicircle corresponds to a radial wavelength $S_{rw}$ in the SPM image indicated by Expression (2) below. In Expression (2), Δx is the length of a step when the SPM image is scanned.

[Math. 2]

$$S_{rw} = \frac{\Delta x(M - 1)}{r_{max}}$$  Expression (2)

Since the radial wavelength $S_{rw}$ of the surface irregularities 22a of the second layer 22 is in the range of 25 nm to 90 nm, optical defects are increased in the surface irregularities 22a, so that the activity on the surface of the second layer 22 can be enhanced. Therefore, the activity of chemical reactions is likely to be higher in the treatments of the food using the catalyst 1.

The transmittance of the first layer 21 for light having a wavelength of 400 nm to 600 nm is, for example, 80% or more. In other words, the minimum value of a spectral transmittance of the first layer 21 in a wavelength range of 400 nm to 600 nm is 80% or more. In this case, it is understood that there are more reliably fewer optical defects in the first layer 21. In this case, the first layer 21 can be a dense, non-porous layer. The first layer 21 may also be a layer that has fine pores but is less likely to interfere with travel of light having a wavelength of 400 nm to 600 nm.

The average transmittance of the catalyst film 20 for light having a wavelength of 300 nm to 365 mm is, for example, 30% or less. Accordingly, the reaction substrates of the chemical reactions in the vicinity of the surface irregularities 22a can be prevented from reacting and being altered by light having a high energy.

The average transmittance of the catalyst film 20 for light having a wavelength of 300 nm to 365 mm is, for example, 0% or more, may be 2% or more, and may be 5% or more.

The metal oxide in the catalyst film 20 is not limited to any specific metal oxide as long as the chemical reactions in the treatments of the food can be promoted by the irradiation of the light L. The metal oxide has, for example, a composition of $Ti_mO_n$, and this composition satisfies conditions of $1 \leq m \leq 2$ and $2 \leq n \leq 3$. Thus, according to the catalyst 1, the activity of the chemical reactions is likely to be higher in the treatments of the food. The metal oxide may be titanium dioxide. The titanium dioxide is, for example, anatase type titanium dioxide. The metal oxide may be strontium titanate, zinc oxide, tungsten oxide, or iron oxide.

The material of the support 10 is not limited to any specific material as long as the support 10 can support the catalyst film 20. Examples of the material of the support 10 include glass and resin. The material of the support 10 preferably has a high transmittance for the light L. The support 10 has, for example, a transmittance of 80% or more at a wavelength of 300 nm to 600 nm.

The thickness of the first layer 21 and the thickness of the second layer 22 are not limited to any specific values. The first layer 21 has, for example, a thickness larger than the thickness of the second layer 22. Accordingly, the absorptivity of the first layer 21 for the light L is more reliably likely to be higher, and many electron-hole pairs are likely to be generated in the first layer 21. The thickness of the first layer 21 is, for example, 1 μm to 3 μm. The thickness of the first layer 21 can be determined, for example, as the arithmetic mean of thicknesses at 10 or more randomly selected locations.

The thickness of the second layer 22 is, for example, 30 nm to 200 nm. The thickness of the second layer 22 can be determined, for example, as the arithmetic mean of thicknesses at 10 or more randomly selected locations.

The method for forming the catalyst film 20 is not limited to any specific method. The catalyst film 20 can be formed, for example, by a method such as sputtering, ion plating, vapor deposition, and sol-gel methods.

The first layer 21 can be formed, for example, by a method such as sputtering, ion plating, vapor deposition, and sol-gel methods. The first layer 21 is preferably formed by a sol-gel method. In this case, the first layer 21 can be formed more easily than by methods that require a vacuum such as sputtering.

The second layer 22 is formed, for example, by a sol-gel method. In this case, the second layer 22 can be formed more easily than by methods that require a vacuum such as sputtering.

An example of a method for producing the catalyst 1 will be described. The catalyst 1 may be produced, for example, by a method including (I), (II), (III), and (IV) below. The conditions (I), (II), (III), and (IV) below are adjusted such that the transmittance $T_{21}$ is higher than the transmittance $T_{22}$ and the surface irregularities 22a have a radial wavelength $S_{rw}$ of 25 nm to 90 nm.

(I) A first liquid L1 containing a metal oxide precursor is applied onto the support 10 to form a first coating film C1.

(II) The first coating film C1 is dried and fired to form the first layer 21.

(III) A second liquid L2 containing a metal oxide precursor is applied onto the first layer 21 to form a second coating film C2.

(IV) The second coating film C2 is dried and fired to form the second layer 22.

In (II), the temperature for the firing of the first coating film C1 is, for example, 400°C to 700°C. In this case, the transmittance of the first layer 21 for light having a wavelength of 400 nm to 600 nm is likely to be higher.

In (IV), the temperature for the firing of the second coating film C2 is, for example, 450°C to 750°C. In this case, it is easy to adjust the radial wavelength $S_{rw}$ of the surface irregularities 22a to be in the range of 25 nm to 90 nm. The temperature for the firing of the second coating film C2 is preferably 500°C to 750°C and more preferably 500°C to 700°C.

For example, the first liquid L1 used in (I) contains an organic polymer. Meanwhile, the second liquid L2 used in (II) contains no organic polymer. In this case, in (II), gel shrinkage is suppressed, so that defects such as cracks and irregularities are less likely to occur. Accordingly, there are fewer optical defects in the first layer 21 and the transmittance $T_{21}$ is likely to be higher. Meanwhile, in (IV), gel shrinkage is likely to occur, so that defects such as cracks and irregularities are likely to occur. As a result, the surface irregularities 22a of the second layer 22 are likely to have the desired radial wavelength $S_{rw}$.

The organic polymer contained in the first liquid L1 is not limited to any specific organic polymer as long as the catalyst film 20 can be formed such that the transmittance $T_{21}$ is higher than the transmittance $T_{22}$ and the surface irregularities 22a have a radial wavelength $S_{rw}$ of 25 nm to 90 nm. The organic polymer may be a homopolymer, or may be a copolymer. The organic polymer is, for example, a copolymer having a polyoxypropylene chain and a polyoxyethylene chain such as a poloxamer. The organic polymer may be the following polymers.

Polyethylene glycol)-block-poly(propylene glycol)-block-poly(ethylene glycol)
Polypropylene glycol)-block-poly(ethylene glycol)-block-poly(propylene glycol)
Polyethylene glycol
Poly(ethylene oxide)
4-(1,1,3,3-tetramethylbutyl)phenyl-polyethylene glycol
t-octylphenoxy polyethoxyethanol

The surface irregularities 22a of the second layer 22 may be formed by predetermined roughening treatment such as etching.

(Embodiment 2)

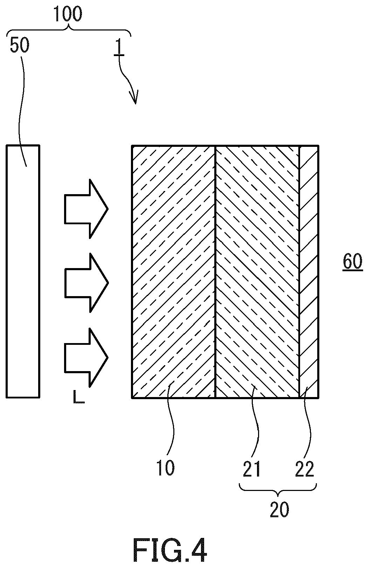

FIG. 4 is a cross-sectional view showing an apparatus 100 according to Embodiment 2. The apparatus 100 includes a catalyst 1 and a light source 50. In the apparatus 100, light L emitted from the light source 50 passes through the support 10 and then is incident on a catalyst film 20. In other words, the light L is applied to the support 10 side of the catalyst 1. At this time, food to be treated is in contact with a second layer 22 of the catalyst film 20.

The apparatus 100 has, for example, a space 60 for containing the food. The space 60 is in contact with the second layer 22. When the light source 50 emits the light L in a state where the food is present in the space 60, the action of the catalyst film 20 can promote chemical reactions for treating the food with high activity.

The wavelength of the light L emitted from the light source 50 is not limited to any specific wavelength. The light L typically has an energy higher than the band gap of the material that forms the catalyst film 20. The wavelength of the light L is, for example, 50 nm to 400 nm.

The treatment of the food performed using the apparatus 100 is not limited to a specific treatment. This treatment may be sterilization, or may be a treatment that changes a component contained in the food to another component. This treatment may be used for brewing, or may be used for food production and food processing other than brewing.

EXAMPLES

The catalyst for food processing of the present disclosure will be described in more detail by means of Examples. The catalyst for food processing of the present disclosure is not limited to the following Examples.

<Example 1>

While agitating 0.092 mol (21 g) of titanium ethoxide, 14.6 cm$^3$ of hydrochloric acid having a concentration of 20% by mass was gradually added to the titanium ethoxide to obtain a mixed solution. To this mixed solution, 6 g of a poloxamer-based surfactant and 74 cm$^3$ of 1-butanol were added, and the obtained solution was agitated for 3 hours to obtain a sol A. The poloxamer-based surfactant contained a block copolymer composed of a polyoxypropylene chain (POP) and two polyoxyethylene chains (POE) between which the POP is located.

A synthetic quartz glass plate having a square shape of 30 square millimeters and a thickness of 1 mm was prepared as a support. The solA was applied onto the support by spin coating at 500 revolutions per minute (rpm) for 180 seconds to form a coating film, and the coating film was fired in an electric furnace at 500°C for 2 hours. The application of the sol A and the firing of the coating film were repeated three times to obtain a sample A-1 according to Example 1 having a titanium oxide-containing layer having a thickness of 1.2 $\mu$m. The thickness of the titanium oxide-containing layer was measured using a micrometer, and was determined as the arithmetic mean of thicknesses at 10 or more randomly selected locations.

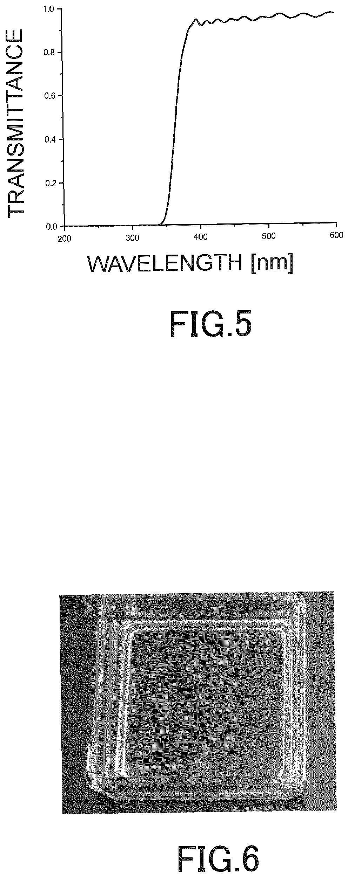

A transmittance spectrum of the sample A-1 was obtained using a UV-visible/NIR spectrophotometer V-770 manufactured by JASCO Corporation. The results are shown in FIG. 5. As shown in FIG. 5, the transmittance of the sample A-1 in the wavelength range of 400 nm to 600 nm was generally 90% or more. Therefore, it is understood that the transmittance of the titanium oxide-containing layer of the sample A-1 for light having a wavelength of 400 nm to 600 nm is 80% or more and there are few optical defects in the titanium oxide-containing layer. Since the sol A contains the organic polymer, it is considered that gel shrinkage was suppressed in the formation of the titanium oxide-containing layer and cracks and irregularities were less likely to occur. It is considered that optical defects were reduced in the titanium oxide-containing layer of the sample A-1. FIG. 6 is a photograph showing the appearance of the sample A-1.

Next, 0.025 mol (2.52 g) of acetylacetone and 0.05 mol (17.50 g) of titanium butoxide were mixed with 32 cm$^3$ of 1-butanol in this order, and the obtained mixture was agitated for 1 hour at room temperature to obtain a mixed solution. An aqueous solution obtained by mixing 0.15 mol (9.05 g) of isopropanol and 3.64 cm$^3$ of water was mixed with this mixed solution, and the obtained mixture was further agitated for 1 hour to obtain a mixed solution. To the obtained mixed solution, 0.04 mol (1.66 g) of acetonitrile was added, and the mixture was agitated for 1 hour to obtain a sol B. The sol B was applied onto the titanium oxide-containing layer of the sample A-1 by spin coating at 6000 rpm for 20 seconds to form a coating film, and this coating film was fired in an electric furnace at 600°C for 2 hours to form a catalyst surface layer having a thickness of 100 nm. Thus, a sample B-1 according to Example 1 was obtained. The thickness of the catalyst surface layer in the sample B-1 was measured using a profilometer Dektak 3 manufactured by Veeco Instruments Inc., and was determined as the arithmetic mean of thicknesses at 10 or more randomly selected locations. In the sample B-1, a catalyst film was composed of the titanium oxide-containing layer and the catalyst surface layer.

A cross-sectional height profile of the catalyst surface layer of the sample B-1 was obtained using an atomic force microscope SPA300 manufactured by Seiko Instruments Inc. The length of the cross-sectional height profile in the scanning direction of a probe was 3 $\mu$m. The obtained cross-sectional height profile was analyzed using Image Metrology's analysis software Scanning Probe Image Processor (SPIP) to determine the radial wavelength of the surface irregularities of the catalyst surface layer. The radial wavelength of the surface irregularities of the catalyst surface layer of the sample B-1 was 36 nm.

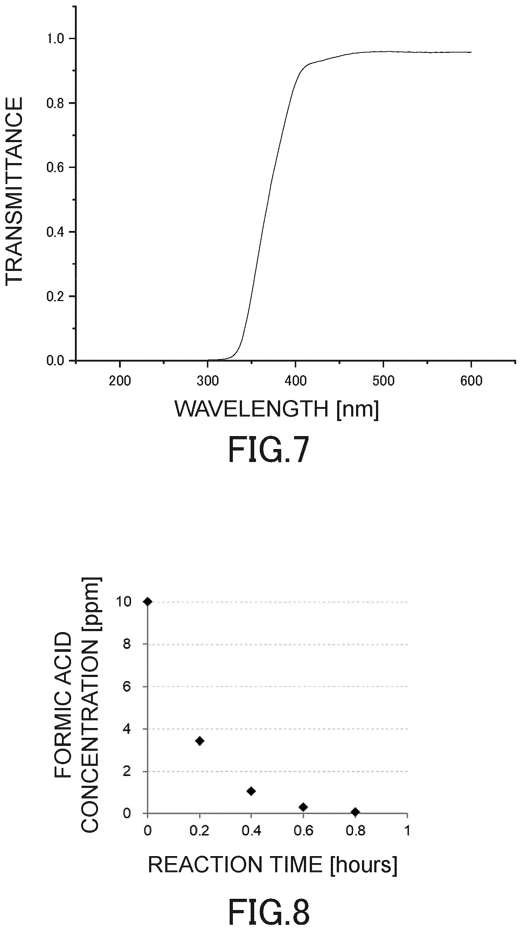

A transmittance spectrum of the sample B-1 was obtained using a UV-visible/NIR spectrophotometer V-770 manufactured by JASCO Corporation. The results are shown in FIG. 7. As shown in FIG. 7, the average transmittance of the catalyst film of the sample B-1 for light having a wavelength of 300 nm to 365 mm was 30% or less.

The catalyst surface layer of the sample B-1 was cloudy. Since the sol B contains no organic polymer, it is considered that gel shrinkage occurred in the firing of the coating film of the sol B and cracks or irregularities occurred in the catalyst surface layer.

(Evaluation of catalytic activity)

In a state where 10 parts per million (ppm) of a formic acid aqueous solution on a mass basis was brought into contact with the catalyst surface layer of the sample B-1, monochromatic light having a wavelength of 350 nm was applied from the support side to cause a formic acid decomposition reaction. The reaction time was set to 0 to 48 minutes. In this reaction, the area to which the monochromatic light was applied was 3.14 cm$^2$, and the volume of the formic acid aqueous solution was 5 cm$^3$. The concentration of formic acid in the solution after the reaction was measured by high-performance liquid chromatography (HPLC). An example of the results is shown in FIG. 8. The reaction rate constant of the formic acid decomposition reaction obtained from the graph shown in FIG. 8 was 5.56 h$^{-1}$. As used herein, the "h" means "hour".

(Evaluation of difficulty in releasing titanium from catalyst)

In a state where 5 cm$^3$ of pure water was brought into contact with the catalyst surface layer of the sample B-1, monochromatic light having a wavelength of 350 nm was applied from the support side for 7 days. A container made of a fluorine resin was used for containing the pure water. Then, the liquid in the container was collected to obtain a sample liquid. The concentration of Ti atoms in the sample liquid was measured using an inductively coupled plasma mass spectrometer (ICP-MS) 7700x manufactured by Agilent Technologies, Inc. The lower limit of the measurement limit in this ICP-MS is 100 parts per trillion (ppt). According to this measurement, no Ti atoms were detected in the sample liquid. Therefore, it was suggested that titanium is less likely to be released from the catalyst film of the sample B-1 and contamination of food with titanium can be prevented.

<Examples 2 and 3>

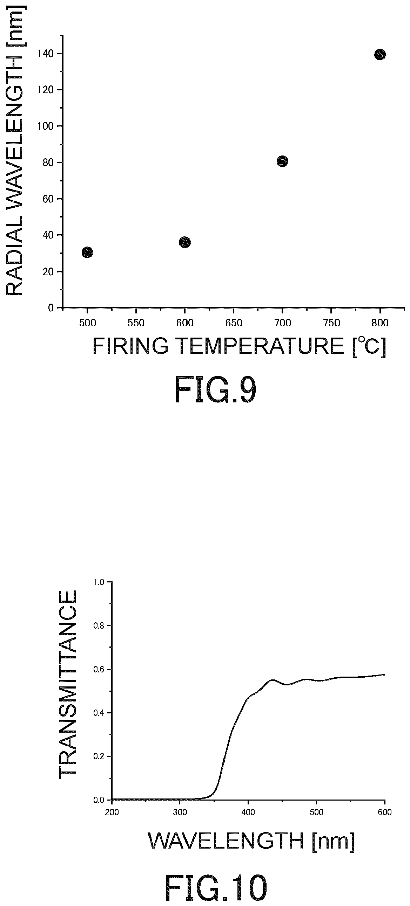

A sample B-2 according to Example 2 including a catalyst film was obtained in the same manner as Example 1, except that the temperature for firing the coating film of the sol B was changed to 500°C. A sample B-2 according to Example 3 including a catalyst film was obtained in the same manner as Example 1, except that the temperature for firing the coating film of the sol B was changed to 700°C. The radial wavelengths of the surface irregularities of the catalyst surface layers of the sample B-2 and the sample B-3 were measured in the same manner as Example 1. The results are shown in FIG. 9. The catalytic activity of the sample B-2 and the sample B-3 was evaluated in the same manner as Example 1. The results are shown in Table 1.

<Comparative Example 1>

A sample β-1 according to Comparative Example 1 including a catalyst film was obtained in the same manner as Example 1, except that the temperature for firing the coating film of the sol B was changed to 800°C. The radial wavelength of the surface irregularities of the catalyst surface layer of the sample β-1 was measured in the same manner as Example 1. The results are shown in FIG. 9. The catalytic activity of the sample β-1 was evaluated in the same manner as Example 1. The results are shown in Table 1.

<Comparative Example 2>

A sol D was prepared in the same manner as the sol B. The sol D was applied onto a support that was a synthetic quartz glass plate having a square shape of 30 square millimeters and a thickness of 1 mm, by spin coating at 500 rpm for 180 seconds to form a coating film, and the coating film was fired in an electric furnace at 600°C for 2 hours. The application of the sol D and the firing of the coating film were repeated seven times to obtain a sample β-2 according to Comparative Example 2 having a catalyst film having a thickness of 1.2 μm. The catalyst film in the sample β-2 was cloudy. Since the sol D contains no organic polymer, it is considered that gel shrinkage occurred in the firing of the coating film of the sol D, and cracks or irregularities occurred in the catalyst film.

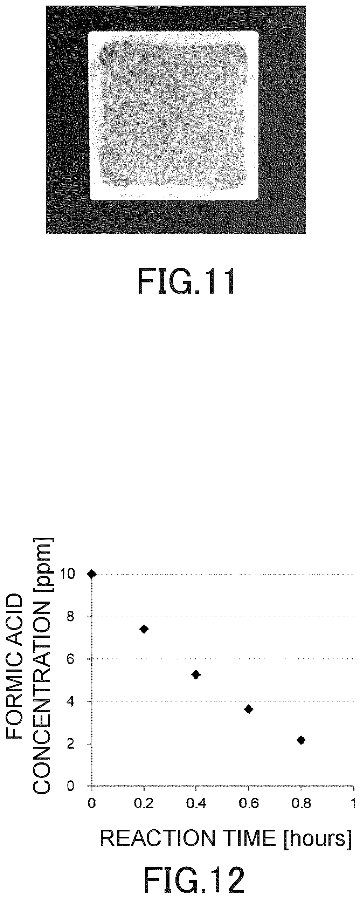

A transmittance spectrum of the sample β-2 was obtained using a UV-visible/NIR spectrophotometer V-770 manufactured by JASCO Corporation. The results are shown in FIG. 10. As shown in FIG. 10, the transmittance of the sample β-2 in the wavelength range of 400 nm to 600 nm was about 60%. FIG. 11 is a photograph showing the appearance of the sample β-2.

The catalytic activity of the sample β-2 was evaluated in the same manner as Example 1. The results are shown in FIG. 12. The reaction rate constant of the formic acid decomposition reaction obtained from the graph shown in FIG. 12 was 1.73 $h^{-1}$.

<Comparative Example 3>

A sol E was prepared in the same manner as the sol A. A sample β-3 according to Comparative Example 3 having a titanium oxide-containing layer having a thickness of 1.2 μm as a single-layer catalyst film was obtained by a sol-gel method using the sol E. The conditions of the sol-gel method were the same as the conditions for forming the titanium oxide-containing layer of the sample A-1 according to Example 1.

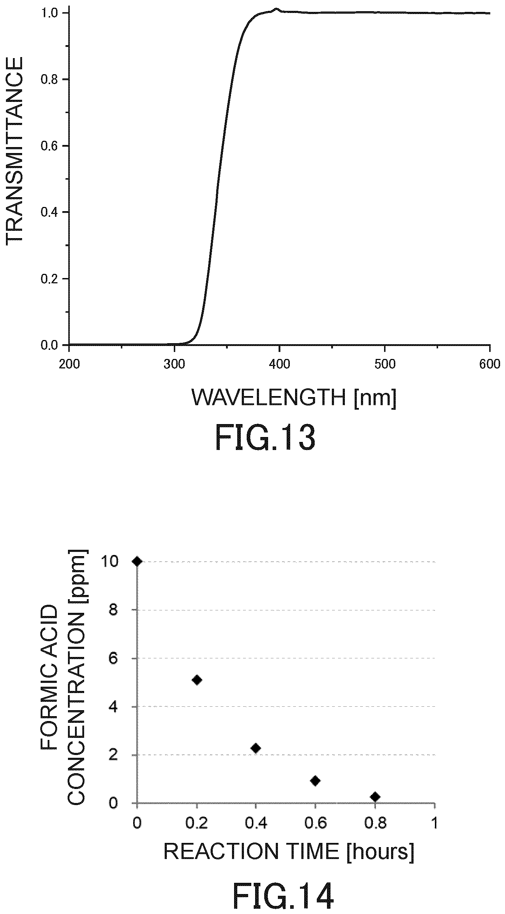

A transmittance spectrum of the sample β-3 was obtained using a UV-visible/NIR spectrophotometer V-770 manufactured by JASCO Corporation. The results are shown in FIG. 13. As shown in FIG. 13, the transmittance of the sample β-3 in the wavelength range of 400 nm to 600 nm was generally 98% or more. Since the sol E contains the organic polymer, it is considered that gel shrinkage was suppressed in the formation of the catalyst film and cracks and irregularities were less likely to occur. Therefore, it is considered that optical defects were reduced in the catalyst film of the sample β-3. The radial wavelength of the surface irregularities of the catalyst film of the sample β-3 was determined in the same manner as Example 1, and was 1000 nm.

The catalytic activity of the sample β-3 was evaluated in the same manner as Example 1. The results are shown in FIG. 14. The reaction rate constant of the formic acid decomposition reaction obtained from the graph shown in FIG. 14 was 3.68 $h^{-1}$.

As shown in Table 1, the reaction rate constant of the formic acid decomposition reaction using the sample according to each Example is higher than the reaction rate constant of the formic acid decomposition reaction using the sample according to each Comparative Example, which suggests that the sample according to each Example exhibits high catalytic activity. As shown in FIG. 9, it is understood that the radial wavelength of the surface irregularities of the catalyst surface layer can be adjusted by adjusting the firing temperature of the coating film of the sol B. It is understood that to adjust the radial wavelength of the surface irregularities of the catalyst surface layer to be in the range of 25 nm to 90 nm, it is advantageous to adjust the firing temperature to be in the range of 450°C to 750°C.

In the sample β-2 according to Comparative Example 2, it is considered that there were many optical defects in the catalyst film, the light permeability of the catalyst film was low, and the diffusion length of electrons and holes was short. Therefore, in the sample β-2, it is considered that the reaction efficiency of the formic acid decomposition reaction was low.

In the sample β-3 according to Comparative Example 3, since there were few optical defects in the catalyst film, it is considered that the light utilization efficiency was high and the diffusion length of electrons and holes was long. Meanwhile, in the sample β-3, since the reaction effective area of the catalyst film was small, it is considered that the reaction efficiency of the formic acid decomposition reaction was low.

[Table 1]

|  | Firing temperature of sol B [°C] | Reaction rate constant of formic acid decomposition reaction [h$^{-1}$] | Radial wavelength of surface irregularities of catalyst film [nm] |
|---|---|---|---|
| Example 1 | 600 | 5.56 | 36.0 |
| Example 2 | 500 | 5.69 | 30.4 |
| Example 3 | 700 | 5.59 | 80.7 |
| Comparative Example 1 | 800 | 3.54 | 139.4 |
| Comparative Example 2 | - | 1.73 | - |
| Comparative Example 3 | - | 3.68 | 1000 |

INDUSTRIAL APPLICABILITY

The catalyst for food processing of the present disclosure has high reactivity and is useful in the fields of food processing, water quality improvement, etc. Since excitation light can be applied from the support side of the catalyst, it is useful for chemical reaction treatments of solutions having a low light transmittance.

**Claims**

1. A catalyst for food processing, comprising:

   a support; and
   a catalyst film formed on the support and containing a metal oxide, wherein
   the catalyst film has a first layer and a second layer separated from the support by the first layer,
   a transmittance of the first layer for light having a wavelength of 400 nm to 600 nm is higher than a transmittance of the second layer for light having a wavelength of 400 nm to 600 nm, and
   the second layer has surface irregularities having a radial wavelength of 25 nm to 90 nm.

2. The catalyst for food processing according to claim 1, wherein the transmittance of the first layer for light having a wavelength of 400 nm to 600 nm is 80% or more.

3. The catalyst for food processing according to claim 1 or 2, wherein an average transmittance of the catalyst film for light having a wavelength of 300 nm to 365 mm is 30% or less.

4. The catalyst for food processing according to any one of claims 1 to 3, wherein the first layer has a thickness larger than a thickness of the second layer.

5. The catalyst for food processing according to any one of claims 1 to 4, wherein

   the metal oxide has a composition of $Ti_mO_n$, and
   the composition satisfies conditions of $1 \leq m \leq 2$ and $2 \leq n \leq 3$.

6. A food processing apparatus comprising:

   the catalyst for food processing according to any one of claims 1 to 5; and
   a light source, wherein
   light emitted from the light source passes through the support and then is incident on the catalyst film.

7. A food processing method comprising, in a state where food is brought into contact with the second layer of the catalyst for food processing according to any one of claims 1 to 5, causing light emitted from a light source to pass through the support and then be incident on the catalyst film.

8. A method for producing a catalyst for food processing, the method comprising:

   applying a first liquid containing a metal oxide precursor onto a support to form a first coating film;
   drying and firing the first coating film to form a first layer;
   applying a second liquid containing a metal oxide precursor onto the first layer to form a second coating film; and
   drying and firing the second coating film to form a second layer, wherein
   a transmittance of the first layer for light having a wavelength of 400 nm to 600 nm is higher than a transmittance of the second layer for light having a wavelength of 400 nm to 600 nm, and
   the second layer has surface irregularities having a radial wavelength of 25 nm to 90 nm.

9. The method according to claim 8, wherein a temperature for the firing of the first coating film is 400°C to 700°C.

10. The method according to claim 8 or 9, wherein a temperature for the firing of the second coating film is 450°C to 750°C.

11. The method according to any one of claims 8 to 10, wherein

    the first liquid contains an organic polymer, and
    the second liquid contains no organic polymer.

12. The method according to any one of claims 8 to 11, wherein

    the metal oxide has a composition of $Ti_mO_n$, and
    the composition satisfies conditions of $1 \leq m \leq 2$ and $2 \leq n \leq 3$.

FIG.1

P1

Ra

## FIG.2A

P2

Ra

## FIG.2B

FIG.3A

FIG.3B

FIG.4

FIG.5

FIG.6

FIG.7

FIG.8

FIG.9

FIG.10

FIG.11

REACTION TIME [hours]

FIG.12

FIG.13

FIG.14

FIG.15

## INTERNATIONAL SEARCH REPORT

| | International application No. |
|---|---|
| | **PCT/JP2021/040500** |

### A. CLASSIFICATION OF SUBJECT MATTER

*B01J 35/02*(2006.01)i
FI:   B01J35/02 J

According to International Patent Classification (IPC) or to both national classification and IPC

### B. FIELDS SEARCHED

Minimum documentation searched (classification system followed by classification symbols)

B01J21/00-38/74

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

JSTPlus/JST7580/JSTChina (JDreamIII)

### C. DOCUMENTS CONSIDERED TO BE RELEVANT

| Category* | Citation of document, with indication, where appropriate, of the relevant passages | Relevant to claim No. |
|---|---|---|
| A | JP 2008-290028 A (TOYODA GOSEI CO., LTD.) 04 December 2008 (2008-12-04) claims 1, 10, paragraphs [0014], [0021], [0027], fig. 2 | 1-12 |
| A | JP 2000-239047 A (NIPPON SHEET GLASS CO., LTD.) 05 September 2000 (2000-09-05) claims 1, 4, paragraphs [0001], [0013], example 1, table 4, fig. 1 | 1-12 |
| A | JP 10-231146 A (NIPPON ITA GLASS TECHNO RES. KK) 02 September 1998 (1998-09-02) claim 1, paragraphs [0001], [0026]-[0028], examples 11, 12 | 1-12 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 December 2021** | **21 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2021/040500**

| Patent document cited in search report | | | Publication date (day/month/year) | Patent family member(s) | Publication date (day/month/year) |
|---|---|---|---|---|---|
| JP | 2008-290028 | A | 04 December 2008 | (Family: none) | |
| JP | 2000-239047 | A | 05 September 2000 | (Family: none) | |
| JP | 10-231146 | A | 02 September 1998 | US 6379776 B1 claim 1, column 1, lines 5-9, column 5, lines 18-49, examples 11, 12 WO 1998/027021 A1 EP 882686 A1 KR 10-0487968 B1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003250514 A

**Non-patent literature cited in the description**

- *CIRP Annals, (France),* 1995, vol. 44 (1), 517-522